# EUROPEAN PATENT SPECIFICATION

(11) **EP 2 175 592 B1**
(45) Date of publication and mention of the grant of the patent: **16.05.2012**
(21) Application number: 08305656.4
(22) Date of filing: 09.10.2008
(51) Int. Cl.: H04L 12/56

(54) **Method for routing data packets in a packet-switched network**
Verfahren zum Routen von Datenpaketen in einem paketgeschalteten Netzwerk
Procédé de routage de paquets de données sur un réseau commuté par paquets

(43) Date of publication of application: 14.04.2010
(73) Proprietor: Alcatel Lucent, 75007 Paris (FR)
(72) Inventor: Puricelli, Paolo Maria, 20040, CAPONAGO (IT); Ciammarughi, Laura, 20040, CAPONAGO (IT)
(74) Representative: Schmidt, Werner Karl

(56) References cited:
- EP-A- 1 328 095
- EP-A- 1 392 026
- CHRISTIAN P ET AL: "IS-IS Automatic Encapsulation; draft-ietf-isis-auto-encap-00.txt" IETF STANDARD-WORKING-DRAFT, INTERNET ENGINEERING TASK FORCE, IETF, CH, vol. isis, 1 July 2002 (2002-07-01), XP015021579 ISSN: 0000-0004

## Description

### Technical Field

The present invention relates to the field of the communication networks. In particular, the present invention relates to a method for routing data packets in a packet-switched network. The present invention further relates to a network element and a communication network implementing the above method.

### Background Art

As it is known, in a packet-switched network the traffic is forwarded in the form of data packets, which are transmitted from a source network element to a destination network element by passing through intermediate network elements.

Typically, a packet comprises a payload and a header. The header includes control information, such as the source address and the destination address of the packet, content integrity information, priority information, information about the type of payload, and similar.

Conventionally, from a logical point of view, communication networks are configured in compliance with the OSI model, according to which the various functions of the network are grouped in seven different logical layers: application layer, presentation layer, session layer, transport layer, network layer, data-link layer, and physical layer.

In particular, with reference to the network layer, the network elements of a communication network can all operate according to the same network layer protocol or according to different network layer protocols. Examples of network layer protocols are CLNP (Connection Less Network Protocol) and IP (Internet Protocol).

Packet routing is performed by using suitable routing protocols.

For example, when all network elements of a communication network operate according to the CLNP protocol, the typically used routing protocol is the IS-IS ("Intermediate System/Intermediate System") routing protocol.

The IS-IS routing protocol provides that each network element compiles a respective adjacency list, i.e. a list of network elements which are adjacent thereto. Subsequently, each network element transmits its adjacency list to all the other network elements by means of messages called LSP (Link State Packets). In this way, each network element knows the adjacency list of all the other network elements of the communication network.

When packets have to be transmitted from a source network element to a destination network element, each network element applies a SPF ("Shortest Path First") algorithm to its adjacency list and to the adjacency lists of the other network elements, thereby defining the shortest path between the source network element and the destination network element.

If the communication network comprises network elements operating according to the CLNP protocol (hereinafter such network elements will be called CLNP-only network elements), network elements operating according to the IP protocol (hereinafter such network elements will be called IP-only network elements) and network elements operating according to both network layer protocols (hereinafter such network elements will be called dual network elements), the typically used routing protocol is the Integrated IS-IS routing protocol. The Integrated IS-IS protocol is defined in the paper "Network Working Group_ Request for Comments: 1995, Ross W. Callon, Digital Equipment Corporation, December 1990, Use of OSI IS-IS for Routing n TCP/IP and Dual Environments", briefly RFC 1195.

However, as it will become clear below, in order to route packets formatted according to the network layer protocol CLNP (hereinafter called CLNP packets) and packets formatted according to the network layer protocol IP (hereinafter called IP packets) by using the Integrated IS-IS protocol, it is necessary that all the network elements operate according to the same network layer protocol. In other words, the communication network must be made up of network elements which are all dual. The specific topological restrictions of RFC 1195 are described in detail in its section 1.4 ("Support of Mixed Routing Domains").

To overcome this limitation, and thus transmit CLNP and IP packets in a communication network comprising CLNP-only network elements, IP-only network elements and any dual network elements, the ITU-T Recommendation G.7712/Y.1703 (03/2003), paragraph 7.1.8, specifies that is possible to encapsulate the CLNP(IP) packets into corresponding IP(CLNP) packets upstream of an IP-only(CLNP-only) network element, and to de-encapsulate them into the original CLNP(IP) packets downstream of the IP-only(CLNP-only) network element. The network layer encapsulation function is based on Generic Routing Encapsulation (GRE), as specified in RFC 2784.

Moreover, the above ITU-T G.7712/Y.1703, paragraph 7.1.9, specifies the network layer tunneling function that provides a static tunnel between two network elements supporting the same network layer protocol.

EP 1 392 026 discloses a modified Shortest Path First routing algorithm for use in a heterogeneous network. The routing algorithm is modified to include predetermined heterogeneous characteristics of the network nodes and to take these characteristics into account when calculating the shortest paths. For example, information may be included in the algorithm which identifies heterogeneous network nodes as it calculates shortest paths. Once a node has been identified as heterogeneous, i.e., capable of supporting at least two protocol sets, this information is carried over into subsequent path entries created by the routing algorithm. The algorithm then uses the encapsulation capability identifier in the calculation of the shortest paths by including the cost of auto-tunnelling between heterogeneous nodes to be taken into account when determining the short path.

### Summary of the Invention

Although the encapsulation allows to use a single routing protocol (i.e. the Integrated IS-IS protocol) for routing CLNP packets and IP packets, it presents some drawbacks.

First, the encapsulation operation has to be manually performed by an operator, which must know *a priori* the network layer protocols supported by each network element of the communication network, thereby identifying the network elements at which the encapsulation has to be performed. This operation, which is typically carried out by skilled persons, is somewhat complex and disadvantageously extends the configuration time of the communication network.

Second, if network elements supporting a network layer protocol different from the above mentioned network layer protocols CLNP and IP, e.g. the network layer protocol IPv6 ("Internet Protocol Version 6") are connected to the communication network, an encapsulation function has to be implemented between the new network layer protocol and each existing network layer protocol. This causes a further increasing of complexity and configuration time.

Therefore, the Applicant has faced the problem to provide a method for routing data packets in a packet-switched network capable of overcoming at least one of the above mentioned drawbacks.

In particular, the Applicant has faced the problem to provide a method for routing data packets in a packet-switched network which can be applied to communication networks comprising CLNP network elements and IP network elements, and possibly also dual network elements, without using the above cited encapsulation and without losing any packets.

According to a first aspect, the present invention provides a method for routing data packets in a packet-switched network, wherein the packet-switched network comprises a network element and further network elements, wherein the network element supports a first network layer protocol, wherein the method comprises, at the network element, the steps of:
- receiving first packets formatted according to the first network layer protocol,
- running a first shortest path algorithm for calculating a shortest path from a source network element to a destination network element, based on information comprising first information about adjacency of the further network elements and second information about network layer protocol(s) supported by the further network elements, the running comprising:
   - determining from the second information which of the further network elements supports the first network layer protocol; and
   - calculating the shortest path by considering only, amongst the further network elements, the network elements supporting the first network layer protocol, and ignoring the network elements which do not support it; and
- routing the received first packets along the calculated shortest path.

Preferably, the network element further supports a second network layer protocol and the method further comprises the steps of:
- receiving second packets formatted according to the second network layer protocol,
- running a second shortest path algorithm for calculating a further shortest path from a further source network element to a further destination network element, based on the information, the running comprising:
   - determining from the second information which of the further network elements supports the second network layer protocol; and
   - calculating the further shortest path by considering only, amongst the further network elements, the network elements supporting the second network layer protocol, and ignoring the network elements which do not support it; and
- routing the received second packets along the calculated further shortest path.

Profitably, the information are comprised in messages from the further network elements.

Preferably, the messages are LSP, Link State Packets, messages. Preferably, the step of routing is performed by at least one routing table.

Preferably, the information further comprise adjacency information of the network element.

Preferably, the method further comprises the steps of:
- compiling an adjacency list by considering as adjacent to the network element only the network element(s) supporting at least the first network layer protocol; and
- transmitting a message to the further network elements, the message comprising information relating to adjacency list and network layer protocol(s) that the network element supports.

According to a second aspect, the present invention provides a network element suitable for routing data packets in a packet-switched network, wherein the packet-switched network comprises further network elements, wherein the network element supports a first network layer protocol and comprises a receiving device for receiving first packets formatted according to the first network layer protocol, the network element being characterized in that it further comprises:
- a processor for running a first shortest path algorithm for calculating a shortest path from a source network element to a destination network element, based on information comprising first information about adjacency of the further network elements and second information about network layer protocol(s) supported by the further network elements, wherein the processor is adapted to:
   - determine from the second information which of the further network elements supports the first network layer protocol;
   - calculate the shortest path by considering only the network elements supporting the first network layer protocol, and ignoring the network elements which do not support it; and
- a routing device for routing the received first packets along the calculated shortest path.

Preferably, the network element further supports a second network layer protocol, the receiving device is suitable for receiving second packets formatted according to the second network layer protocol, the processor is adapted to run a second shortest path algorithm for calculating a further shortest path from a further source network element to a further destination network element, based on the information, wherein the processor is adapted to:
- determine from the second information which of the further network elements supports the second network layer protocol; and
- calculate the further shortest path by considering only the network elements supporting the second network layer protocol, and ignoring the network elements which do not support it;
and the routing device is adapted to route the received second packets along the calculated further shortest path.

Preferably, the information are comprised in messages from the further network elements.

Preferably, the messages are LSP, Link State Packets, messages.

Preferably, the routing device comprises at least one routing table.

According to a third aspect, the present invention provides a packet-switched network comprising at least one network element as above described.

### Brief description of the drawings

The present invention will be better understood by reading the following detailed description, given by way of example and not of limitation, to be read by referring to the accompanying drawings, wherein:
- Figure 1 shows a known packet-switched network which uses the above mentioned known IS-IS routing protocol;
- Figure 2 shows a packet-switched network suitable for implementing the routing method according to an embodiment of the present invention;

- Figure 3 shows in detail a dual network element of the packet-switched network of Figure 2; and
- Figure 4 shows the packet-switched network of Figure 2 connected to a sub-network.

### Detailed description of preferred embodiments of the invention

As said above, if the communication network comprises network elements operating according to the CLNP protocol, network elements operating according to the IP protocol and network elements operating according to both network layer protocols, the typically used routing protocol is the Integrated IS-IS routing protocol.

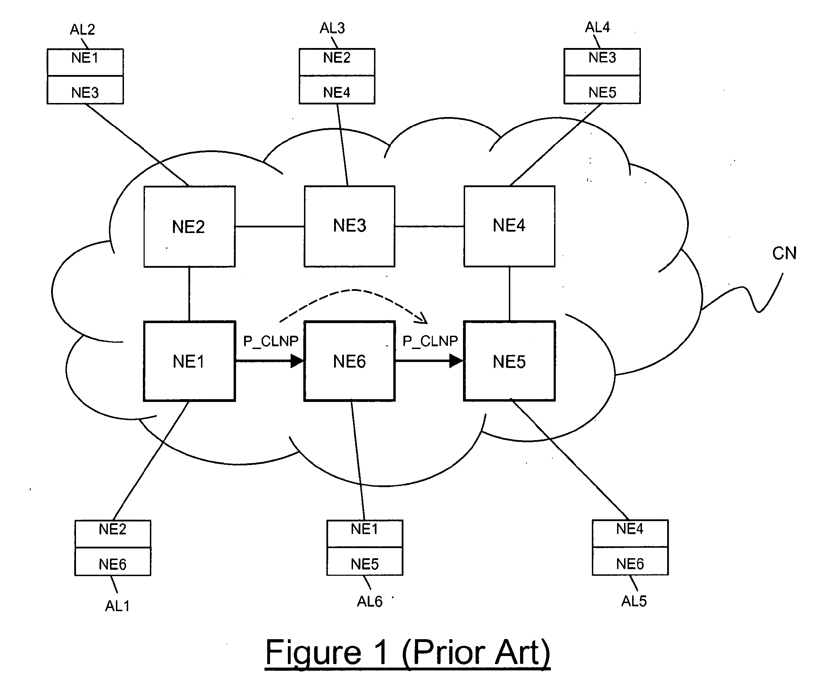

An example of such a known communication network is shown in Figure 1.

For simplicity, the communication network CN of Figure 1 is formed by six network elements NE1-NE6. Moreover, it is assumed by way of example that the network elements NE1, NE3 and NE5 are dual network element, the network elements NE2 and NE4 are CLNP-only network elements, and the network element NE6 is an IP-only network element.

The Integrated IS-IS routing protocol provides to apply a SPF algorithm to the adjacency lists of the various network elements to route both CLNP and IP packets.

It is assumed, for example, that one wishes to transmit a flow of CLNP packets P_CLNP from the network element NE1 to the network element NE5.

Each network element NE1-NE6 compiles its adjacency list AL1-AL6 and transmits it to all the other network elements by means of respective messages LSP. The above ITU-T G.7712/Y.1703, paragraph 7.1.10.1.1 states that, in order to compile the correct adjacency list, each network element must consider as adjacent thereto only the network elements supporting one or more of the network layer protocols that it supports. Therefore, a CLNP-only network element considers as adjacent thereto only CLNP-only network elements and dual network elements, an IP-only network element considers as adjacent thereto only IP-only network elements and dual network elements, while a dual network element considers as adjacent thereto both IP-only and CLNP-only network elements.

Thus, the network element NE1 has an adjacency list AL1 formed by the network elements NE2 and NE6, the network element NE2 has an adjacency list AL2 formed by the network elements NE1 and NE3, the network element NE3 has an adjacency list AL3 formed by the network elements NE2 and NE4, the network element NE4 has an adjacency list AL4 formed by the network elements NE3 and NE5, the network element NE5 has an adjacency list AL5. formed by the network elements NE4 and NE6, and the network element NE6 has an adjacency list AL6 formed by the network elements NE1 and NE5.

Each network element NE1-NE6 thus applies the SPF algorithm to its adjacency list AL1-AL6 and to the adjacency lists of all the other network elements of the communication network CN, thereby obtaining as shortest path the path NE1→NE6→NE5 shown in bold in Figure 1.

However, the network element NE6 is an IP-only network element, which is not capable of processing CLNP packets. Thus, the CLNP packets will become lost.

Similarly, if one wants to route IP packets in a communication network CN of the type shown in Figure 1, an IP-only network element, by applying the SPF algorithm to its adjacency list and to the adjacency lists of the other network elements, could select as shortest path a path comprising a CLNP-only network element, e.g. the network element NE2, which is not capable of routing IP packets. This causes IP packets to become lost.

Therefore, in order to route CLNP and IP packets by using the Integrated IS-IS protocol, it is necessary that all the network elements operate according to the same network layer protocol. In other words, the communication network must be made up of network elements which are all dual.

In the example shown in Figure 1, in order to be able to transmit CLNP packets through the path NE1→NE6→NE5, the flow of packets P_CLNP has to be encapsulated into corresponding IP packets before they reach the network element NE6, and the flow of IP packets has to be de-encapsulated into the original CLNP packets out from the network element NE6.

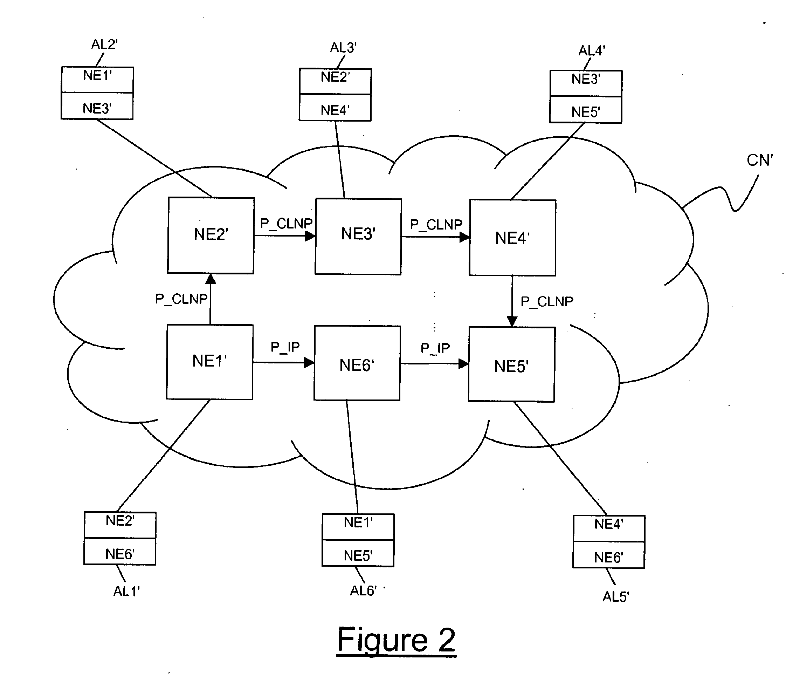

Figure 2 shows a packet-switched network CN' suitable for implementing the method for routing data packets according to an embodiment of the present invention.

For simplicity, the communication network CN' comprises six network elements NE1'-NE6'. Moreover, it is assumed by way of example that the network elements NE1', NE3' and NE5' are dual network elements, the network elements NE2' and NE4' are CLNP-only network elements, and the network element NE6' is an IP-only network element.

The Integrated IS-IS routing protocol provides to apply a different SPF algorithm for each different network layer protocol supported by the network element itself.

As it will be described in greater detailed below, each SPF algorithm is configured in such a way that it considers only the network elements which operate according to the corresponding network level protocol, thus ignoring the network elements which do not operate according to the corresponding network layer protocol.

In particular, with reference to Figure 2, preferably each network element NE1'-NE6' compiles a respective adjacency list AL1'-AL6' by considering as adjacent thereto only the network elements supporting the same network layer protocol it supports (in other words, each adjacency list observes the above mentioned limitations stated by the ITU-T Recommendation G.7712/Y.1703 (03/2003), paragraph 7.1.10.1.1).

Accordingly, the network element NE1' has an adjacency list AL1' formed by the network elements NE2' and NE6', the network element NE2' has an adjacency list AL2' formed by the network elements NE1' and NE3', the network element NE3' has an adjacency list AL3' formed by the network elements NE2' and NE4', the network element NE4' has an adjacency list AL4' formed by the network elements NE3' and NE5', the network element NE5' has an adjacency list AL5' formed by the network elements NE4' and NE6', and the network element NE6' has an adjacency list AL6' formed by the network elements NE1' and NE5'.

Subsequently, each network element NE1'-NE6' transmits its adjacency list to all the other network elements, preferably by means of the above mentioned messages LSP.

At least one message LSP (in particular the first message LSP, or "LSP number zero") generated by a network element contains, in addition to the adjacency list of the network element, a field PS ("Protocol Supported"), wherein the list of the types of network layer protocols supported by the network element is stored.

After the reception of the messages LSP, each network element NE1'-NE6' knows the adjacency list of all the other network elements of the communication network CN', as well as the network layer protocols which they support.

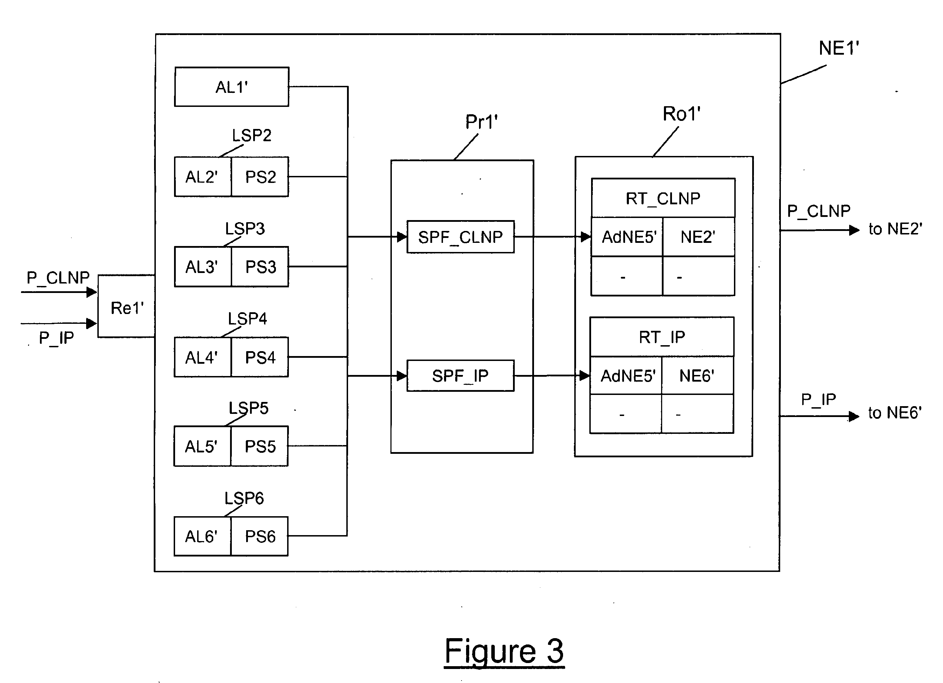

It is considered, by way of example, the dual network element NE1', shown in Figure 3.

The network element NE1' compiles its adjacency list AL1' and receives, by means of messages LSP2-LSP6 information about the adjacency lists and the types of network layer protocols supported by the other networks elements NE2'-NE6'. For example:
- the message LSP2 received from the network element NE2' contains the adjacency list AL2' of the network element NE2', and being NE2' a CLNP-only network element, the field PS2 indicates that the network element NE2' supports the network layer protocol CLNP;
- the message LSP3 received from the network element NE3' contains the adjacency list AL3' of the network element NE3', and being NE3' a dual network element, the field PS3 indicates that the network element NE3' supports both network layer protocols CLNP and IP;
- the message LSP4 received from the network element NE4' contains the adjacency list AL4' of the network element NE4', and being NE4' a CLNP-only network element, the field PS4 indicates that the network element NE4' supports network layer protocol CLNP;
- the message LSP5 received from the network element NE5' contains the adjacency list AL5' of the network element NE5', and being NE5' a dual network element, the field PS5 indicates that the network element NE5' supports both network layer protocols CLNP and IP; and
- the message LSP6 received from the network element NE6' contains the adjacency list AL6' of the network element NE6', and being NE6' an IP-only network element, the field PS6 indicates that the network element NE6' supports the network layer protocol IP.

Further, preferably, the network element NE1' comprises a processor Pr1' configured for running a first SPF algorithm corresponding to the network layer protocol CLNP (designated as SPF_CLNP in Figure 3) and a second SPF algorithm corresponding to the network layer protocol IP (designated as SPF_IP in Figure 3).

Preferably, the first SPF algorithm SPF_CLNP is suitable for calculating, based on the adjacency lists AL1'-AL6' and the types of network layer protocols supported by the other network elements NE2'-NE6', a first routing table RT_CLNP for the CLNP packets, as it will be described in greater detail below. Moreover, preferably, the second SPF algorithm SPF_IP is suitable for calculating, based on the adjacency lists AL1'-AL6' and the types of network layer protocols supported by the other network elements NE2'-NE6', a second routing table RT_IP for the IP packets, as it will be described in greater detail below.

The network elements NE3' and NE5', which also are dual network elements, are also a processor (not shown) suitable for implementing both the first SPF algorithm SPF_CLNP and the second SPF algorithm SPF_IP and are substantially as NE1'. A full description thereof is therefore omitted.

On the other hand, being the network elements, NE2' and NE4' CLNP-only network elements, their processors (not shown) are suitable for implementing only the first SPF algorithm SPF_CLNP.

Finally, being the network element NE6' an IP-only network element, its processor (not shown) is suitable for implementing only the second SPF algorithm SPF_IP.

It is now assumed that one wishes to transmit a flow of CLNP packets P_CLNP from a source network element (e.g. the network element NE1') to a destination network element (e.g. the network element NE5'). The addresses of the source and destination network elements, respectively AdNE1' ed AdNE5', are preferably stored in the header of each packet of the flow of packets P_CLNP.

The flow of packets P_CLNP is received at a receiving device Re1' of the network element NE1'.

At this point, the processor Pr1' of the network element NE1' preferably runs the first SPF algorithm SPF_CLNP. In particular, the first SPF algorithm SPF_CLNP preferably performs the following operations:
a) it determines from the fields PS2-PS6 of the network elements NE2'-NE6' which of the network elements are configured for supporting the network layer protocol CLNP. In the example, the network layer protocol CLNP is supported also by the network elements NE2', NE3', NE4' and NE5';
b) it calculates the shortest path from the network element NE1' to the network element NE5', by considering only the network elements supporting the network layer protocol CLNP, and ignoring the network elements which do not support it, thereby obtaining as result the path NE1'→NE2'→NE3'→NE4'→NE5' shown in Figure 2;
c) based on the calculated shortest path, a routing device Ro1' route the packets P_CLNP, by creating a row in a first routing table RT_CLNP, such a row associating to the destination address AdNE5' the network element belonging to the calculated shortest path and adjacent to the network element NE1', i.e. the network element NE2'.

Preferably, the above illustrated first SPF algorithm SPF_CLNP is also run at the processors (not shown) of the other network elements of the communication network CN', which support the network layer protocol CLNP, i.e. the network elements NE2'-NE5'. By assuming that each of these network elements operates as the network element NE1' shown in Figure 3, each of them runs the first SPF algorithm SPF_CLNP, which works as described above, thereby obtaining as shortest path for the flow of packets P_CLNP the path NE1'→NE2'→NE3'→NE4'→NE5' shown in Figure 2.

The packets P_CLNP are then transmitted from the source network element E1' to the destination network element NE5', by passing through the intermediate network elements NE2', NE3' and NE4', all operating according to the network layer protocol CLNP.

It is now assumed that one wishes to transmit a flow of IP packets P_IP from the source network element NE1' to the destination network element NE5'.

With still reference to the dual network element NE1', shown in detail in Figure 3, the flow of packets P_IP is received at the receiving device Re1' of the network element NE1'

At this point, the processor Pr1' of the network element NE1' preferably runs the second SPF algorithm SPF_IP. In particular, the second SPF algorithm SPF_IP performs the following operations:
a) it determines from the fields PS2-PS6 of the network elements NE2'-NE6', which network elements support the network layer protocol IP. In the example, the network layer protocol IP is supported also by the network elements NE3', NE5' and NE6';
b) it calculates the shortest path from the network element NE1' to the network element NE5', by considering only the network elements supporting the network layer protocol IP, and ignoring the network elements which do not support it, thereby obtaining as result the path NE1'→NE6'→NE5' shown in Figure 2;
c) based on the calculated shortest path, the routing device Ro1' routes the packets P_IP by creating a row in a second routing table RT_IP, such a row associating to the destination address AdNE5' the network element belonging to the calculated shortest path and adjacent to the network element NE1', i.e. the network element NE6'.

Preferably, the above illustrated second SPF algorithm SPF_IP is run at the processor (not shown) of the other network elements of the communication network CN' supporting the network layer protocol IP, i.e. the network elements NE3', NE5' and NE6'. By assuming that each of these network elements operates as the network element NE1' shown in Figure 3, each of them runs the second SPF algorithm SPF_IP which works as above described, thereby obtaining as shortest path for the flow of packets P_IP the path NE1'→NE6'→NE5' shown in Figure 2.

The packets P_IP are thus transmitted from the source network element NE1' to the destination network element NE5', by passing through the intermediate network elements (in this example, the network element NE6') which all operate according to the network layer protocol IP.

Therefore, advantageously, the inventive method allows to route data packets in a communication network comprising network elements which operate according to different network layer protocols. In particular, it allows to perform the routing in communication networks comprising CLNP-only network elements, IP-only network elements and dual network elements, without performing any encapsulation.

Indeed, due to the fact that each network element runs a different SPF algorithm for each network layer protocol that it supports, and that each SPF algorithm performs the shortest path calculation by considering only network elements supporting the same network layer protocol, the shortest path calculated by each SPF algorithm can contain only network elements supporting the same network layer protocol.

Therefore, advantageously, it does not occur the condition shown in Figure 1, wherein the SPF algorithm performed for calculating the shortest path to route CLNP packets obtains as a result a path comprising one or more network elements which do not support the network layer protocol CLNP.

Therefore, advantageously, the CLNP packets and the IP packets can be routed in the exemplary communication network CN' without it never occurs a condition in which a CLNP packet is received by an IP-only network element or vice versa. In other words, advantageously, it never occurs any condition in which there is packet loss.

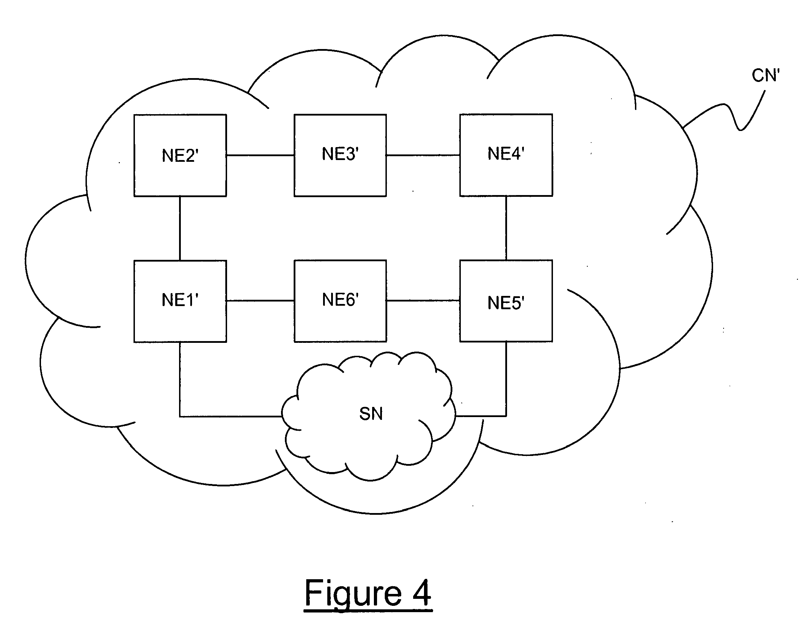

With reference to Figure 4, it is assumed that a sub-network SN is connected to the communication network CN' of Figure 2, which sub-network SN comprises, in addition to CLNP network elements and/or IP network elements and/or dual network elements, network elements (also) operating according to a different network layer protocol, e.g. the network layer protocol IPv6.

For simplicity, it is assumed that such a sub-network SN is connected between the network element NE1' and the network element NE5'.

Advantageously, according to the routing method described above with reference to Figures 2 and 3, by adding the sub-network SN comprising network elements (also) operating according to the network layer protocol IPv6, the routing of packets P_CLNP and P_IP is not disturbed in any way.

In this case, in fact, the adjacency list AL1' of the network element NE1' includes, in addition to the network elements NE2', NE6', also any network elements of the sub-network SN, which are adjacent to the network element NE1'. Moreover, the network element NE1' receives, in addition to the messages LSP2-LSP6 described above, LSP messages from the network elements of the sub-network SN, containing the respective adjacency lists and information indicative of the network layer protocols which they support.

It is now assumed that one wishes to transmit a flow of packets P_CLNP from the source network element NE1' to the destination network element NE5'.

As described above, the network element NE1' runs the first SPF algorithm SPF_CLNP, which considers only the network elements supporting the network layer protocol CLNP and ignores the network elements which do not support the network layer protocol CLNP. Running the first SPF algorithm SPF_CLNP provides as result the shortest path between the network element NE1' and the network element NE5', which can be again the path NE1'→NE2'→NE3'→NE4'→NE5' calculated with reference to the example of Figure 2, or a different path passing through the sub-network SN.

In this last case, the portion of the shortest path passing through the sub-network SN advantageously comprises only network elements supporting the network layer protocol CLNP.

If the known Integrated IS-IS routing protocol above described is used for routing the flow of CLNP packets P_CLNP from the source network element NE1' to the destination network element NE5', the SPF algorithm could calculate as shortest path a path passing through the sub-network SN and including one or more network elements supporting only the network layer protocol IPv6.

In this case, disadvantageously, the transmission of CLNP packets through this path could only occur by implementing in the sub-network SN an encapsulation process of the CLNP packets into corresponding IPv6 packets. As above mentioned, this would cause an increasing of the complexity of the development and configuration operations of the sub-network SN.

On the contrary, advantageously, as the shortest path calculated by the first SPF algorithm SPF_CLNP never includes network elements which does not support the CLNP, it never presents any condition wherein it is necessary to implement such an encapsulation process.

Advantageously, the communication network CN' connected to the sub-network SN is thus capable of routing CLNP, IP and IPv6 packets by simply configuring the network elements of the sub-network SN like the network element NE1' shown in Figure 3 and by implementing a third SPF algorithm at the network elements (also) operating according to the network layer protocol IPv6. Also in this case, the third SPF algorithm preferably considers in the calculation of the shortest path from a source network element to a destination network element, exclusively the network elements supporting the same network layer protocol (i.e. IPv6) and ignores the network elements which do not support it.

Therefore, advantageously, when the communication network is connected to one or more network elements supporting a different network layer protocol, it is not necessary to implement in the network any encapsulation between this network layer protocol and the existing network layer protocols. This consequently causes a decreasing of the complexity and the configuration time of the communication network.

As said above, by using the Integrated IS-IS protocol, it is necessary that all the network elements operate according to the same network layer protocol. In other words, the communication network must be made up of network elements which are all dual. Advantageously, the present invention allows to remove such topological restrictions, thereby permitting to use a communication network comprising CLNP-only, IP-only and dual network elements. It is thus possible to eliminate or reduce the need of providing static tunnels and to increase the communication network scalability, i.e. to connect so-called IPv6-capable network elements (IPv6-only, IP+IPv6, CLNP+IPv6, CLNP+IP+IPv6 network elements) without having to re-design the communication network.

Therefore, advantageously, the method of the invention greatly reduce the time/cost necessary to design a communication network.

## Claims

1. A method for routing data packets in a packet-switched network (CN'), wherein said packet-switched network (CN') comprises a network element (NE1') and further network elements (NE2'-NE6'),
wherein said network element (NE1') supports a first network layer protocol (CLNP; IP),
wherein said method comprises, at said network element (NE1'), the steps of:
- receiving first packets (P_CLNP; P_IP) formatted according to said first network layer protocol (CLNP; IP);
- running (Pr_CLNP; Pr_IP) a first shortest path algorithm (SPF_CLNP; SPF_IP) for calculating a shortest path from a source network element to a destination network element, based on information (AL1', LSP2-LSP6) comprising first information about adjacency (AL2'-AL6') of said further network elements (NE2'-NE6') and second information (PS2-PS6) about network layer protocol(s) supported by said further network elements (NE2'-NE6'), said running comprising:
- determining from said second information (PS2-PS6) which of the further network elements (NE2'-NE6') supports the first network layer protocol; and
- calculating the shortest path by considering only, amongst said further network elements (NE2'-NE6'), the network elements (NE2'-NE5'; NE3', NE5', NE6') supporting said first network layer protocol, and ignoring the network elements (NE6'; NE2', NE4') which do not support it; and
- routing (RT_CLNP; RT_IP) said received first packets (P_CLNP; P_IP) along the calculated shortest path.

2. The method according to claim 1, wherein said network element (NE1') further supports a second network layer protocol (IP; CLNP), wherein said method further comprises the steps of:
- receiving second packets formatted according to said second network layer protocol;
- running (Pr_IP; Pr_CLNP) a second shortest path algorithm (SPF_IP; SPF_CLNP) for calculating a further shortest path from a further source network element to a further destination network element, based on said information (LSP2-LSP6), said running comprising:
- determining from said second information (PS2-PS6) which of the further network elements (NE2'-NE6') supports the second network layer protocol; and
- calculating the further shortest path by considering only, amongst said further network elements (NE2'-NE6'), the network elements (NE3', NE5', NE6'; NE2'-NE5') supporting said second network layer protocol, and ignoring the network elements (NE2', NE4'; NE6') which do not support it; and
- routing (RT_CLNP; RT_IP) said received second packets (P_CLNP; P_IP) along the calculated further shortest path.

3. The method according to claim 1 or 2, wherein said information (LSP2-LSP6) are comprised in messages from the further network elements (NE2'-NE6').

4. The method according to claim 3, wherein said messages are LSP, Link State Packets, messages.

5. The method according to any of claims 1 to 4, wherein said step of routing (RT_CLNP; RT_IP) is performed by at least one routing table (RT_CLNP; RT_IP).

6. The method according to any of claims 1 to 5, wherein said information (LSP2-LSP6) further comprise adjacency information of said network element (NE1').

7. The method according to any of claims 1 to 6, wherein it further comprises the steps of:
- compiling an adjacency list (AL1') by considering as adjacent to said network element (NE1') only the network element(s) (NE2', NE6') supporting at least the first network layer protocol (CLNP; IP); and
- transmitting a message (LSP1) to the further network elements (NE2'-NE6'), said message (LSP1) comprising information relating to adjacency list (AL1') and the network layer protocol(s) that said network element (NE1') supports.

8. A network element (NE1') suitable for routing data packets in a packet-switched network (CN'),
wherein said packet-switched network (CN') comprises further network elements (NE2'-NE6'),
wherein said network element (NE1') supports a first network layer protocol (CLNP; IP) and comprises a receiving device (Re1') for receiving first packets (P_CLNP; P_IP) formatted according to the first network layer protocol (CLNP; IP),
said network element (NE1') being **characterized in that** it further comprises:
- a processor (Pr1') for running a first shortest path algorithm (SPF_CLNP; SPF_IP) for calculating a shortest path from a source network element to a destination network element, based on information (AL1', LSP2-LSP6) comprising first information about adjacency (AL2'-AL6') of said further network elements (NE2'-NE6') and second information (PS2-PS6) about network layer protocol(s) supported by said further network elements (NE2'-NE6'), wherein said processor (Pr1') is adapted to:
- determine from said second information (PS2-PS6) which of the further network elements (NE2'-NE6') supports the first network layer protocol; and
- calculate the shortest path by considering only, amongst said further network elements (NE2'-NE6'), the network elements (NE2'-NE5'; NE3', NE5', NE6') supporting said first network layer protocol, and ignoring the network elements (NE6'; NE2', NE4') which do not support it; and
- a routing device (Ro1') for routing said received first packets (P_CLNP; P_IP) along the calculated shortest path.

9. The network element (NE1') according to claim 8, wherein it further supports a second network layer protocol (IP; CLNP), wherein the receiving device (Re1') is suitable for receiving second packets (P_IP; P_CLNP) formatted according to said second network layer protocol,
- wherein said processor (Pr1') is adapted to run a second shortest path algorithm (SPF_IP; SPF_CLNP) for calculating a further shortest path from a further source network element to a further destination network element, based on said information (AL1', LSP2-LSP6), wherein said processor (Pr1') is adapted to:
- determine from said second information (LSP2-LSP6) which of the further network elements (NE2'-NE6') supports the second network layer protocol; and
- calculate the further shortest path by considering only, amongst said further network elements (NE2'-NE6'), the network elements (NE3', NE5', NE6'; NE2'-NE5') supporting said second network layer protocol, and ignoring the network elements (NE2', NE4'; NE6') which do not support it; and
- wherein said routing device (Ro1') is adapted to route said received second packets (P_IP; P_CLNP) along the calculated further shortest path.

10. The network element (NE1') according to claim 8 or 9, wherein said information (LSP2-LSP6) are comprised in messages received from the further network elements (NE2'-NE6').

11. The network element (NE1') according to claim 10, wherein said messages are LSP, Link State Packets, messages.

12. The network element according to any of claims 8 to 11, wherein said routing device (Ro1') comprises at least one routing table (RT_CLNP; RT_IP).

13. A packet-switched network (CN') comprising at least one network element (NE1') according to any of claims 8 to 12.

## Patentansprüche

1. Verfahren zum Routen von Datenpaketen in einem paketvermittelten Netzwerk (CN'), wobei das besagte paketvermittelte Netzwerk (CN') ein Netzwerkelement (NE1') und weitere Netzwerkelemente (NE2'-NE6') umfasst,
wobei das besagte Netzwerkelement (NE1') ein erstes Netzwerkschichtprotokoll (CLNP; IP) unterstützt,
wobei das besagte Verfahren an dem besagten Netzwerkelement (NE1'), die folgenden Schritte umfasst:
- Empfangen von ersten Paketen (P_CLNP; P_IP), welche gemäß dem besagten ersten Netzwerkschichtprotokoll (CLNP; IP) formatiert sind;
- Ausführen (Pr_CLNP; Pr_IP) eines ersten Kürzester-Pfad-Algorithmus (SPF_CLNP; SPF_IP), um einen kürzesten Pfad von einem Quell-Netzwerkelement zu einem Ziel-Netzwerkelement auf der Basis von Informationen (AL1', LSP2-LSP6), welche erste Informationen über die Nachbarschaft (AL2'-AL6') der besagten weiteren Netzwerkelemente (NE2'-NE6') und zweite Information (PS2-PS6) über ein oder mehrere Netzwerkschichtprotokolle, welche von den besagten weiteren Netzwerkelementen (NE2'-NE6') unterstützt werden, enthalten, zu berechnen, wobei das besagte Ausführen umfasst:
- Ermitteln, aus den besagten zweiten Informationen (PS2-PS6), welches der weiteren Netzwerkelemente (NE2'-NE6') das erste Netzwerkschichtprotokoll unterstützt; und
- Berechnen des kürzesten Pfades unter der alleinigen Berücksichtigung derjenigen Netzwerkelemente (NE2'-NE5'; NE3', NE5', NE6') unter den besagten weiteren Netzwerkelementen (NE2'-NE6'), welche das besagte erste Netzwerkschichtprotokoll unterstützen, wobei diejenigen Netzwerkelemente (NE6'; NE2', NE4'), die dieses Protokoll nicht unterstützen, ignoriert werden; und
- Routen (RT_CLNP; RT_IP) der besagten empfangenen ersten Pakete (P_CLNP; P_IP) über den berechneten kürzesten Pfad.

2. Verfahren nach Anspruch 1, wobei das besagte Netzwerkelement (NE1') weiterhin ein zweites Netzwerkschichtprotokoll (IP; CLNP) unterstützt, wobei das besagte Verfahren weiterhin die folgenden Schritte umfasst:
- Empfangen von zweiten Paketen, welche gemäß dem besagten zweiten Netzwerkschichtprotokoll formatiert sind;
- Ausführen (Pr_IP; Pr_CLNP) eines zweiten Kürzester-Pfad-Algorithmus (SPF_IP; SPF_CLNP), um einen weiteren kürzesten Pfad von einem weiteren Quell-Netzwerkelement zu einem weiteren Ziel-Netzwerkelement auf der Basis der besagten Informationen (LSP2-LSP6) zu berechnen, wobei das besagte Ausführen umfasst:
- Ermitteln, aus den besagten zweiten Informationen (PS2-PS6), welches der weiteren Netzwerkelemente (NE2'-NE6') das zweite Netzwerkschichtprotokoll unterstützt; und
- Berechnen des weiteren kürzesten Pfades unter der alleinigen Berücksichtigung derjenigen Netzwerkelemente (NE3'-NE5', NE6'; NE2'-NE5') unter den besagten weiteren Netzwerkelementen (NE2'-NE6'), welche das besagte zweite Netzwerkschichtprotokoll unterstützen, wobei diejenigen Netzwerkelemente (NE2', NE4'; NE6'), die dieses Protokoll nicht unterstützen, ignoriert werden; und
- Routen (RT_CLNP; RT_IP) der besagten empfangenen zweiten Pakete (P_CLNP; P_IP) über den berechneten weiteren kürzesten Pfad.

3. Verfahren nach Anspruch 1 oder 2, wobei die besagten Informationen (LSP2- LSP6) in Nachrichten von den weiteren Netzwerkelementen (NE2'-NE6') enthalten sind.

4. Verfahren nach Anspruch 3, wobei die besagten Nachrichten Link State Packets bzw. LSP-Nachrichten sind.

5. Verfahren nach einem beliebigen der Ansprüche 1 bis 4, wobei der besagte Schritt des Routens (RT_CLNP; RT_IP) von mindestens einer Routing-Tabelle (RT_CLNP; RT_IP) durchgeführt wird.

6. Verfahren nach einem beliebigen der Ansprüche 1 bis 5, wobei die besagten Informationen (LSP2-LSP6) weiterhin Nachbarschaftsinformationen des besagten Netzwerkelements (NE1') umfassen.

7. Verfahren nach einem beliebigen der Ansprüche 1 bis 6, weiterhin die folgenden Schritte umfassend:
- Erstellen einer Nachbarschaftsliste (AL1'), wobei nur dasjenige/diejenigen Netzwerk(e) (NE2', NE6') als mit dem besagten Netzwerkelement (NE1') berücksichtigt wird/werden, welche(s) zumindest das erste Netzwerkschichtprotokoll (CLNP; IP) unterstütrtlunterstützen; und
- Übertragen einer Nachricht (LSP1) an die weiteren Netzwerkelemente (NE2'-NE6'), wobei die besagte Nachricht (LSP1) Informationen in Bezug auf die Nachbarschaftsliste (AL1') und das/die von dem besagten Netzwerkelement (NE1') unterstützte(n) Netzwerkschichtprotokoll(e) umfasst.

8. Netzwerkelement (NE1'), geeignet für das Routen von Datenpaketen in einem paketvermittelten Netzwerk (CN'),
wobei das besagte paketvermittelte Netzwerk (CN') weitere Netzwerkelemente (NE2'-NE6') umfasst,
wobei das besagte Netzwerkelement (NE1') ein erstes Netzwerkschichtprotokoll (CLNP; IP) unterstützt und eine Empfangsvorrichtung (Re1') für den Empfang von ersten Paketen (P_CLNP; P_IP), welche gemäß dem ersten Netzwerkschichtprotokoll (CLNP; IP) formatiert sind, umfasst,
wobei das besagte Netzwerkelement (NE1') **dadurch gekennzeichnet ist, dass** es weiterhin umfasst:
- Einen Prozessor (Pr1') zum Ausführen eines ersten Kürzester-Pfad-Algorithmus (SPF_CLNP; SPF_IP), um einen kürzesten Pfad von einem Quell-Netzwerkelement zu einem Ziel-Netzwerkelement auf der Basis von Informationen (AL1', LSP2-LSP6), welche erste Informationen über die Nachbarschaft (AL2'-AL6') der besagten weiteren Netzwerkelemente (NE2'-NE6') und zweite Information (PS2-PS6) über ein oder mehrere Netzwerkschichtprotokolle, welche von den besagten weiteren Netzwerkelementen (NE2'-NE6') unterstützt werden, enthalten, zu berechnen, wobei der besagte Prozessor (Pr1') für das Durchführen der folgenden Schritte ausgelegt ist:
- Ermitteln, aus den besagten zweiten Informationen (PS2-PS6), welches der weiteren Netzwerkelemente (NE2'-NE6') das erste Netzwerkschichtprotokoll unterstützt; und
- Berechnen des kürzesten Pfades unter der alleinigen Berücksichtigung derjenigen Netzwerkelemente (NE2'-NE5'; NE3', NE5', NE6') unter den besagten weiteren Netzwerkelementen (NE2'-NE6'), welche das besagte erste Netzwerkschichtprotokoll unterstützen, wobei diejenigen Netzwerkelemente (NE6'; NE2', NE4'), die dieses Protokoll nicht unterstützen, ignoriert werden; und
- eine Routing-Vorrichtung (Ro1') zum Routen der besagten empfangenen ersten Pakete (P_CLNP; P_IP) über den berechneten kürzesten Pfad.

9. Netzwerkelement (NE1') nach Anspruch 8, wobei es weiterhin ein zweites Netzwerkschichtprotokoll (IP; CLNP) unterstützt, wobei die Empfangsvorrichtung (Re1') für den Empfang von zweiten Paketen (P_IP; P_CLNP), welche gemäß dem besagten zweiten Netzwerkschichtprotokoll formatierst sind, ausgelegt ist,
- wobei der besagte Prozessor (Pr1') dazu ausgelegt ist, einen zweiten Kürzester-Pfad-Algorithmus (SPF_IP; SPF_CLNP) zum Berechnen, auf der Basis der besagten Informationen (AL1', LSP2-LSP6), eines weiteren kürzesten Pfades von einem weiteren Quell-Netzwerkelement zu einem weiteren Ziel-Netzwerkelement auszuführen, wobei der besagte Prozessor (Pr1') für die folgenden Schritte ausgelegt ist:
- Ermitteln, aus den besagten zweiten Informationen (LSP2-LSP6), welches der weiteren Netzwerkelemente (NE2'-NE6') das zweite Netzwerkschichtprotokoll unterstützt; und
- Berechnen des weiteren kürzesten Pfades, wobei nur diejenigen Netzwerkelemente (NE3', NE5', NE6'; NE2'-NE5') unter den besagten weiteren Netzwerkelementen (NE2'-NE6') berücksichtigt werden, welche das besagte zweite Netzwerkschichtprotokoll unterstützen, und diejenigen Netzwerkelemente (NE2', NE4; NE6'), die dieses Protokoll nicht unterstützen, ignoriert werden; und
- wobei die besagte Routing-Vorrichtung (Ro1') dazu ausgelegt ist, die empfangenen zweiten Pakete (P_IP; P_CLNP) über den berechneten weiteren kürzesten Pfad zu routen.

10. Netzwerkelement (NE1') nach Anspruch 8 oder 9, wobei die besagten Informationen (LSP2-LSP6) in von den weiteren Netzwerkelementen (NE2'-NE6') empfangenen Nachrichten enthalten sind.

11. Netzwerkelement (NE1') nach Anspruch 10, wobei die besagten Nachrichten Link State Packets bzw. LSP-Nachrichten sind.

12. Netzwerkelement nach einem beliebigen der Ansprüche 8 bis 11, wobei die besagte Routing-Vorrichtung (Ro1') mindestens eine Routing-Tabelle (RT_CLNP; RT_IP) umfasst.

13. Paketvermitteltes Netzwerk (CN') mit mindestens einem Netzwerkelement (NE1') gemäß einem beliebigen der Ansprüche 8 bis 12.

## Revendications

1. Procédé pour acheminer des paquets de données dans un réseau à commutation de paquets (CN'), dans lequel ledit réseau à commutation de paquets (CN') comprend un élément de réseau (NE1') et d'autres éléments de réseau (NE2'-NE6'),
dans lequel ledit élément de réseau (NE1') prend en charge un premier protocole de couche de réseau (CLNP ; IP),
dans lequel ledit procédé comprend, au niveau dudit élément de réseau (NEV), les étapes suivantes :
- recevoir des premiers paquets (P_CLNP ; P_IP) mis en forme conformément audit premier protocole de couche de réseau (CLNP ; IP) ;
- exécuter (Pr_CLNP ; Pr_IP) un premier algorithme de chemin le plus court (SPF_CLNP : SPF_IP) pour calculer un chemin le plus court d'un élément de réseau source à un élément de réseau destinataire, en se basant sur des informations (AL1', LSP2-LSP6) comprenant des premières informations concernant le voisinage (AL2'-AL6') desdits autres éléments de réseau (NE2'-NE6') et des deuxièmes informations (PS2-PS6) concernant un/des protocole(s) de couche de réseau pris en charge par lesdits autres éléments de réseau (NE2'-NE6'), ladite exécution comprenant les étapes suivantes :
- déterminer à partir desdites deuxièmes informations (PS2-PS6) quel élément parmi les autres éléments de réseau (NE2'-NE6') prend en charge le premier protocole de couche de réseau ; et
- calculer le chemin le plus court en considérant uniquement, parmi lesdits autres éléments de réseau (NE2'-NE6'), les éléments de réseau (NE2'-NE5' ; NE3', NE5', NE6') prenant en charge ledit premier protocole de couche de réseau, et ignorer les éléments de réseau (NE6' ; NE2', NE4') qui ne le prennent pas en charge ; et
- acheminer (RT_CLNP ; RT_IP) lesdits premiers paquets reçus (P_CLNP ; P_IP) le long du chemin le plus court calculé.

2. Procédé selon la revendication 1, dans lequel ledit élément de réseau (NE1') prend en outre en charge un deuxième protocole de couche de réseau (IP ; CLNP), dans lequel ledit procédé comprend en outre les étapes suivantes :
- recevoir des deuxièmes paquets mis en forme conformément audit deuxième protocole de couche de réseau ;
- exécuter (Pr_IP ; Pr_CLNP) un deuxième algorithme de chemin le plus court (SPF_IP ; SPF_CLNP) pour calculer un autre chemin le plus court d'un autre élément de réseau source à un autre élément de réseau destinataire, en se basant sur lesdites informations (LSP2-LSP6), ladite exécution comprenant les étapes suivantes :
- déterminer à partir desdites deuxièmes informations (PS2-PS6) quel élément parmi les autres éléments de réseau (NE2'-NE6') prend en charge le deuxième protocole de couche de réseau ; et
- calculer l'autre chemin le plus court en considérant uniquement, parmi lesdits autres éléments de réseau (NE2'-NE6'), les éléments de réseau (NE3', NE5', NE6' ; NE2'-NE5') prenant en charge ledit deuxième protocole de couche de réseau, et ignorer les éléments de réseau (NE2' ; NE4', NE6') qui ne le prennent pas en charge ; et
- acheminer (RT_CLNP ; RT_IP) lesdits deuxièmes paquets reçus (P_CLNP; P_IP) le long de l'autre chemin le plus court calculé.

3. Procédé selon la revendication 1 ou 2, dans lequel lesdites informations (LSP2-LSP6) sont comprises dans des messages provenant des autres éléments de réseau (NE2'-NE6').

4. Procédé selon la revendication 3, dans lequel lesdits messages sont des messages LSP, paquets d'état de liaison.

5. Procédé selon l'une quelconque des revendications 1 à 4, dans lequel ladite étape d'acheminement (RT_CLNP ; RT_IP) est réalisée par le biais d'au moins une table de routage (RT_CLNP ; RT_IP).

6. Procédé selon l'une quelconque des revendications 1 à 5, dans lequel lesdites informations (LSP2-LSP6) comprennent en outre des informations de voisinage dudit élément de réseau (NE1').

7. Procédé selon l'une quelconque des revendications 1 à 6, comprenant en outre les étapes suivantes :
- compiler une liste de voisinage (AL1') en considérant comme voisin dudit élément de réseau (NE1') uniquement le(s) élément(s) de réseau (NE2', NE6') prenant en charge au moins le premier protocole de couche de réseau (CLNP ; 1 P) ; et
- transmettre un message (LSP1) aux autres éléments de réseau (NE2'-NE6'), ledit message (LSP1) comprenant des informations relatives à la liste de voisinage (AL1') et au(x) protocole(s) de couche de réseau que ledit élément de réseau (NE1') prend en charge.

8. Élément de réseau (NE1') permettant d'acheminer des paquets de données dans un réseau à commutation de paquets (CN'),
dans lequel ledit réseau à commutation de paquets (CN') comprend d'autres éléments de réseau (NE2'-NE6'),
dans lequel ledit élément de réseau (NE1') prend en charge un premier protocole de couche de réseau (CLNP ; IP) et comprend un dispositif de réception (Re1') pour recevoir des premiers paquets (P CLNP ; P_IP) mis en forme conformément au premier protocole de couche de réseau (CLNP ; IP),
ledit élément de réseau (NE1') étant **caractérisé en ce qu'**il comprend en outre :
- un processeur (Pr1') pour exécuter un premier algorithme de chemin le plus court (SPF_CLNP ; SPF_IP) pour calculer un chemin le plus court d'un élément de réseau source à un élément de réseau destinataire, en se basant sur des informations (AL1', LSP2-LSP6) comprenant des premières informations concernant le voisinage (AL2'-AL6') desdits autres éléments de réseau (NE2'-NE6') et des deuxièmes informations (PS2-PS6) concernant un/des protocole(s) de couche de réseau pris en charge par lesdits autres éléments de réseau (NE2'-NE6'), dans lequel ledit processeur (Pr1') est adapté pour :
- déterminer à partir desdites deuxièmes informations (PS2-PS6) quel élément parmi les autres éléments de réseau (NE2'-NE6') prend en charge le premier protocole de couche de réseau ; et
- calculer le chemin le plus court en considérant uniquement, parmi lesdits autres éléments de réseau (NE2'-NE6'), les éléments de réseau (NE2'-NE5' ; NE3', NE5', NE6') prenant en charge ledit premier protocole de couche de réseau, et ignorer les éléments de réseau (NE6' ; NE2', NE4') qui ne le prennent pas en charge ; et
- un dispositif d'acheminement (Ro1') pour acheminer lesdits premiers paquets reçus (P_CLNP ; P_IP) le long du chemin le plus court calculé.

9. Élément de réseau (NE1') selon la revendication 8, dans lequel il prend en outre en charge un deuxième protocole de couche de réseau (IP ; CLNP), dans lequel le dispositif de réception (Re1') permet de recevoir des deuxièmes paquets (P_IP ; P_CLNP) mis en forme conformément audit deuxième protocole de couche de réseau,
- dans lequel ledit processeur (Pr1') est adapté pour exécuter un deuxième algorithme de chemin le plus court (SPF_IP ; SPF_CLNP) pour calculer un autre chemin le plus court d'un autre élément de réseau source à un autre élément de réseau destinataire, en se basant sur lesdites informations (AL1', LSP2-LSP6), dans lequel ledit processeur (Pr1') est adapté pour :
- déterminer à partir desdites deuxièmes informations (LSP2-LSP6) quel élément parmi les autres éléments de réseau (NE2'-NE6') prend en charge le deuxième protocole de couche de réseau ; et
- calculer l'autre chemin le plus court en considérant uniquement, parmi lesdits autres éléments de réseau (NE2'-NE6'), les éléments de réseau (NE3', NE5', NE6' ; NE2'-NE5') prenant en charge ledit deuxième protocole de couche de réseau, et ignorer les éléments de réseau (NE2' ; NE4', NE6') qui ne le prennent pas en charge ; et
- dans lequel ledit dispositif d'acheminement (Ro1') est adapté pour acheminer lesdits deuxièmes paquets reçus (P_IP ; P_CLNP) le long de l'autre chemin le plus court calculé.

10. Élément de réseau (NE1') selon la revendication 8 ou 9, dans lequel lesdites informations (LSP2-LSP6) sont comprises dans des messages reçus des autres éléments de réseau (NE2'-NE6').

11. Élément de réseau (NE1') selon la revendication 10, dans lequel lesdits messages sont des messages LSP, paquets d'état de liaison.

12. Élément de réseau selon l'une quelconque des revendications 8 à 11, dans lequel ledit dispositif d'acheminement (Ro1') comprend au moins une table de routage (RT_CLNP : RT_IP).

13. Réseau à commutation de paquets (CN') comprenant au moins un élément de réseau (NE1') selon l'une quelconque des revendications 8 à 12.
